(19) Europäisches Patentamt
European Patent Office
Office européen des brevets

(11) **EP 0 942 564 B1**

(12) **EUROPÄISCHE PATENTSCHRIFT**

(45) Veröffentlichungstag und Bekanntmachung des Hinweises auf die Patenterteilung:
**06.01.2010 Patentblatt 2010/01**

(51) Int Cl.:
***H04L 27/22*** *(2006.01)*

(21) Anmeldenummer: **99104699.6**

(22) Anmeldetag: **10.03.1999**

(54) **Verfahren zur Detektion eines gepulsten Nutzsignals**

Method for detecting a pulsed signal

Procedé pour détecter de signaux à impulsions

(84) Benannte Vertragsstaaten:
**AT CH DE FR GB LI SE**

(30) Priorität: **12.03.1998 DE 19810695**

(43) Veröffentlichungstag der Anmeldung:
**15.09.1999 Patentblatt 1999/37**

(73) Patentinhaber: **EADS Deutschland GmbH
81663 München (DE)**

(72) Erfinder: **Herrmann, Franz
89164 Öpfingen (DE)**

(74) Vertreter: **Meel, Thomas et al
c/o Dornier GmbH
Patentabteilung
88039 Friedrichshafen (DE)**

(56) Entgegenhaltungen:
**EP-A- 0 413 108    US-A- 5 703 914**

## Beschreibung

Die Erfindung geht aus von einem Verfahren zur Detektion eines gepulsten Nutzsignales nach dem Oberbegriff des Patentanspruchs 1.

In vielen Fällen der Elektrotechnik, insbesondere der Nachrichtentechnik, ist es erforderlich, aus einem stark verrauschten analogen elektrischen Eingangssignal ein darin enthaltenes gepulstes Nutzsignal zu detektieren, so daß dieses dann ausgewertet werden kann. Dazu ist es naheliegend, das Eingangssignal zunächst mittels eines Tiefpaß- oder Bandpaßfilters, dessen Grenzfrequenzen an die Bandbreite des Nutzsignales angepaßt sind, zu filtern. Es entsteht ein frequenzbegrenztes Eingangssignal, in dem jedoch in vielen Fällen immer noch keine Detektion des Nutzsignales möglich ist, da weiterhin ein zu hoher Rauschanteil vorhanden ist. Dieser kann nun dadurch beseitigt werden, daß bei dem frequenzbegrenzten Eingangssignal eine Integration, deren Integrationszeitkonstante entsprechend dem zu detektierenden Nutzsignal optimiert ist, durchgeführt wird.

Die Drückschrift US 5 703 914 zeigt eine Taktrückgewinnungsschaltung.

Der Erfindung liegt die Aufgabe zugrunde, ein gattungsgemäßes Verfahren anzugeben, das eine zuverlässige Detektion eines Nutzsignales, das höchste Frequenzanteile und das einen hohen Rauschanteil in Kombination mit hoher Momentanbandbreite enthält, ermöglicht.

Diese Aufgabe wird gelöst durch die im kennzeichnenden Teil des Patentanspruchs 1 angegebenen Merkmale. Vorteilhafte Ausgestaltungen und/oder Weiterbildungen sind den weiteren Ansprüchen entnehmbar.

Ein erster Vorteil besteht darin, daß bereits das frequenzbegrenzten Eingangssignal digitalisiert wird und die Detektion des Nutzsignales rein digital erfolgt.

Ein zweiter Vorteil besteht darin, daß selbst bei einem Signal/Rauschverhältnis von minimal 2 dB noch eine zuverlässige Detektion möglich ist.

Weitere Vorteile ergeben sich aus der nachfolgenden Beschreibung.

Die Erfindung wird im folgenden anhand von Ausführungsbeispielen unter Bezugnahme auf schematisch dargestellte Figuren näher erläutert. Es zeigen

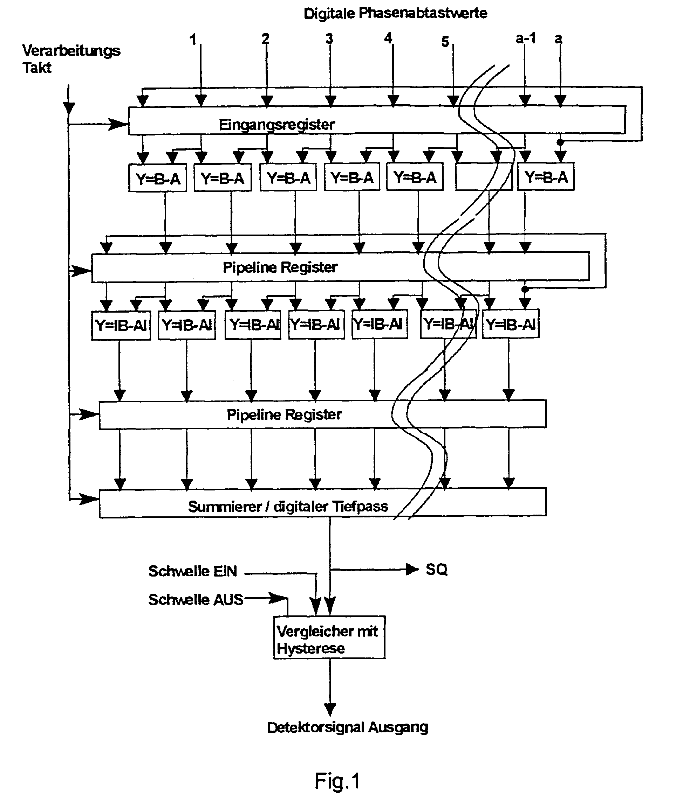

Fig. 1 bis Fig. 4    schematisch dargestellte Diagramme zur Erläuterung der Erfindung.

Bei der Erfindung wird zunächst in an sich bekannter Weise vorzugsweise durch eine Bandpaßfilterung ein analoges frequenzbegrenztes Eingangssignal erzeugt, dessen Mittenfrequenz und Bandbreite an die Frequenzlage des zu detektierenden Nutzsignales angepaßt sind. Dieses analoge frequenzbegrenztes Eingangssignal wird dann in vorgebbarer Weise verstärkt und mittels eines an sich bekannten Phasen/Digital Wandlers digitalisiert. Diese Verstärkung und Phasen/Digital-Wandlung fungiert hierbei als Begrenzer-Verstärker, da eine Information über die Amplitudenwerte des frequenzbegrenzten Eingangssignals für die Detektion nicht benötigt wird. Bei der Phasen/Digital Wandlung, die mit einer vorgebbaren Abtastrate ausgeführt wird, entstehen digitale Phasenabtastwerte mit vorgebbarer Wortlänge, beispielsweise 8 Bit.

Entsprechend dem in Fig.1 dargestellten Ausführungsbeispiel für einen parallele Verarbeitung wird nun immer eine vorgebbare Anzahl a, beispielsweise ....(Anzahl?), von Phasenabtastwerten in paralleler Form, das heißt gleichzeitig, mittels eines Verarbeitungs-Taktes in ein Eingangsregister eingelesen. Anschließend werden immer zwei jeweils benachbarte Phasenabtastwerte, die mit A und B bezeichnet sind, mittels einer Subtrahierschaltung subtrahiert, so daß für alle Phasenabtastwerte eine Folge zugehöriger erster Phasendifferenzen $Y = B - A$ entsteht. Diese werden in einem sogenannten Pipeline Register zwischengespeichert. Die dort in benachbarter Form vorliegenden ersten Phasendifferenzen werden, wie beschrieben, erneut voneinander subtrahiert, das heißt, es werden immer zwei benachbart liegende erste Phasendifferenzen voneinander subtrahiert und bei den entstehenden Ergebnissen die Absolut-Beträge gebildet. Es entsteht also eine Folge von Absolut-Beträgen $Y = |B - A|$ von zweiten Phasendifferenzen. Diese Folge von Absolut-Beträgen $Y = |B - A|$ wird nun in einem weiteren Pipeline Register zwischengespeichert. Anschließend werden die Absolut-Beträge mittels eines digitalen Summierers sowie eines digitalen Tiefpasses weiterverarbeitet. Dessen Ausgangssignal, das auch als Signalqualitätswert SQ bezeichnet wird, wird einem Vergleicher mit Hysterese, beispielsweise einem digitalen Fensterkomparator, zugeleitet. Diesem werden außerdem noch zwei Schwellwertsignale, die mit Schwelle_EIN sowie Schwelle_AUS bezeichnet sind, zugeleitet. An dem Ausgang des Vergleichers mit Hysterese entsteht ein rechteckförmiges Detektorsignal Ausgang, das dem analogen Nutzsignal entspricht und das in digitaler Form weiter verarbeitet werden kann.

Diese Art der Detektion ist vorteilhafterweise lediglich von dem Signal/Rausch-Verhältnis des frequenzbegrenzten analogen Eingangssignales abhängig. Ansonsten bei einem analogen Signal nötige Regelungen der Verstärkung sowie Kompensationen einer Temperaturdrift oder ähnlichem sind bei der Erfindung nicht nötig, da die Amplitudeninformation des frequenzbegrenzten analogen Eingangssignales vorteilhafterweise nicht benötigt wird.

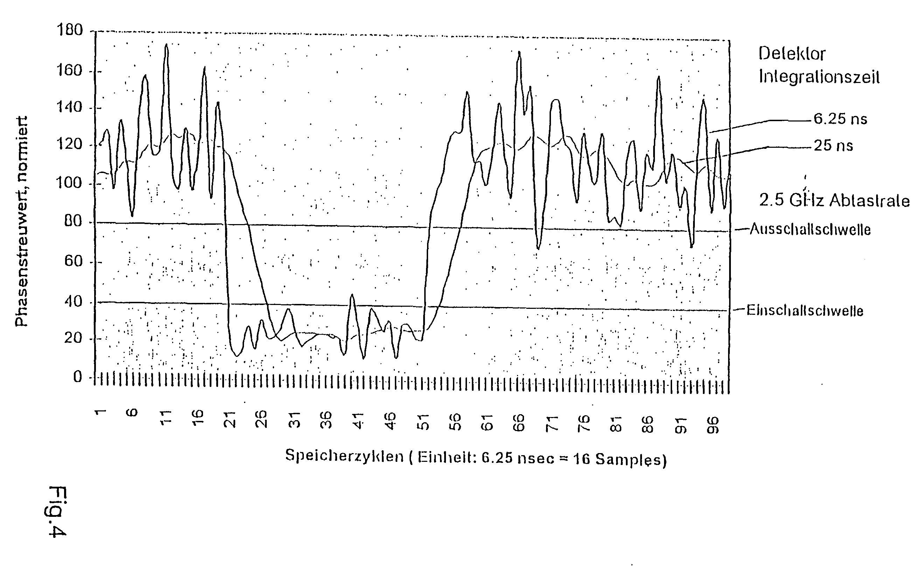

Fig. 4 zeigt ein beispielhaftes Ergebnis einer solchen Detektion am Ausgang des digitalen Tiefpasses. Dabei besteht das zugehörige analoge Eingangssignal (beispielhaft) aus einem gepulsten Nutzsignal mit einer Pulsbreite von ungefähr 200 nsec. Die minimale meßbare Pulsbreite wird hierbei begrenzt durch die Integrationszeit des Verfahrens, die hier in Fig. 4 beispielhaft 6,25 nsec bzw. 25 nsec beträgt. Es wird ein Signal/Rausch-Verhältnis von ungefähr 10 dB zugrunde gelegt. Ein solches analoges (Hochfrequenz-)Eingangssignal wird nun mit einer Abtastrate von 2,5 GHz abgetastet, das heißt in digitale Phasenwerte umgewandelt. Nach der beschriebenen Detektion entsteht am Ausgang des digitalen Tiefpasses ein Signal, dessen Welligkeit von der gewählten Integrationszeit des digitalen Tiefpasses abhängt. Fig. 4 zeigt ein erstes Ausgangssignal, das mit 6.25 ns bezeichnet ist und das zwar eine erhebliche Welligkeit besitzt, dafür aber eine hohe Zeitmeßauflösung bzw. Zeitmeßgenauigkeit bei dem dargestellten Puls. Bei diesem ersten Ausgangssignal wurde in dem digitalen Tiefpaß eine Integrationszeit von 6,25 nsec gewählt. Das mit 25 ns bezeichnete zweite Ausgangssignal hat dagegen eine wesentlich geringere Welligkeit, dafür aber eine weniger hohe Zeitmeßauflösung bzw. Zeitmeßgenauigkeit bei dem dargestellten Puls. Bei diesem zweiten Ausgangssignal wurde in dem digitalen Tiefpaß eine Integrationszeit von 25 nsec gewählt.

Soll nun ein solches zweites Ausgangssignal in ein entsprechendes digitales Ausgangssignal umgewandelt werden, so ist es zweckmäßig, in dem Vergleicher mit Hysterese (Fig.1) die dort dargestellten Schwellwertsignale Schwelle_EIN sowie Schwelle_AUS entsprechend den in Fig.4 dargestellten Schaltschwellen: Einschaltschwelle beziehungsweise Ausschaltschwelle zu wählen.

Bei der in Fig.1 dargestellten Anordnung werden die digitalen Abtastwerte immer parallel in Gruppen von a Abtastwerten eingelesen und verarbeitet, wobei a eine vorgebbare ganze positive Zahl ist. Es ist ersichtlich, daß ein solches Verfahren lediglich durch die verfügbare maximale Abtastrate bei der Phasen/Digitalwandlung begrenzt ist und eine zeitlich sehr schnelle Detektion ermöglicht. Denn der in Fig.1 erwähnte Verarbeitungs-Takt, mit welchem die Register sowie der Tiefpaß getaktet werden, berechnet sich gemäß der Formel:

$$\text{Verarbeitungs-Takt} = \text{Abtasttakt} : a \quad .$$

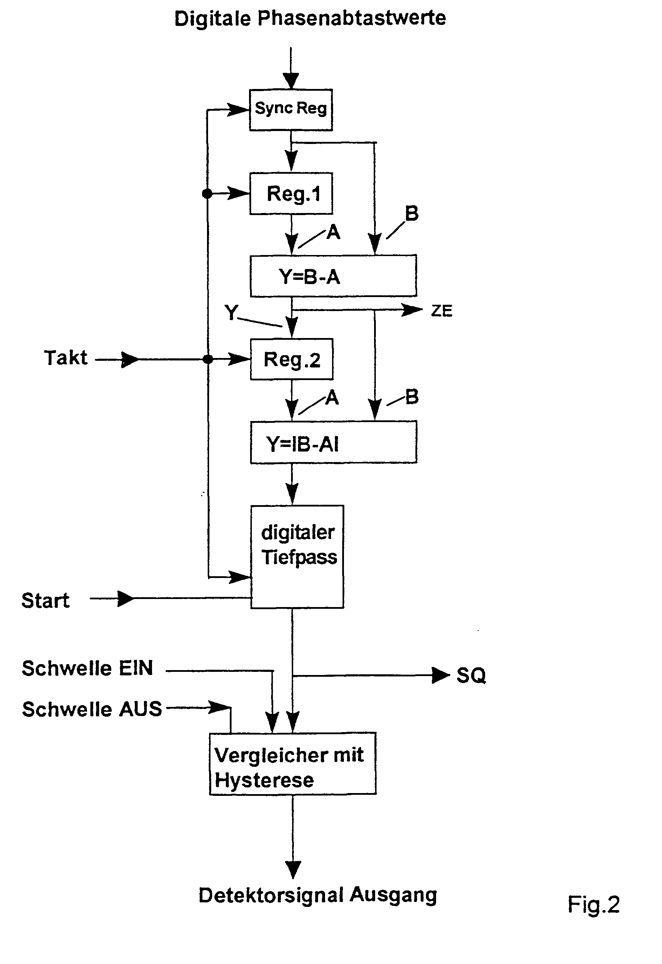

Werden nicht so hohe Anforderungen an die Verarbeitungsgeschwindigkeit gestellt, das heißt, sollen gepulste Nutzsignale mit größerer Pulsdauer sowie Pulspause detektiert werden, so ist eine Art serielle Verarbeitung der erwähnten digitalen Phasenwerte entsprechend Fig.2 möglich.

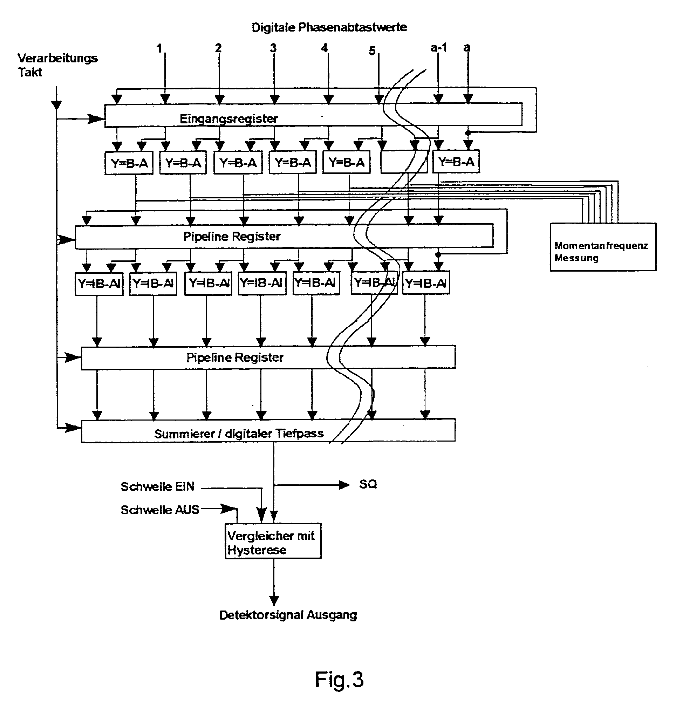

Gemäß Fig.2 werden die bei der Phasen/Digital-Wandlung erzeugten digitalen Phasenwerte seriell, das heißt zeitlich nacheinander, einzeln in ein Synchronisierungs-Register Sync_Reg eingelesen, das getaktet ist mit einem Takt, welcher dem Abtasttakt entspricht. Ein derart in das Synchronisierungs-Register Sync_Reg eingelesener erster Phasenwert A wird beim nächsten (zweiten) Takt in ein erstes (Speicher-)Register Reg.1 geschoben. Bei diesem Takt wird gleichzeitig ein zweiter Phasenwert B in das Synchronisierungs-Register Sync_Reg eingelesen. Beim nächsten (dritten) Takt wird der erste Phasenwert A aus dem ersten Register Reg.1 ausgelesen und an einen ersten Eingang einer Subtrahierstufe, die mit Y=B-A bezeichnet ist, gelegt. Bei demselben (dritten) Takt wird gleichzeitig der in dem Synchronisierungs-Register Sync_Reg gespeicherte zweite Phasenwert B ausgelesen und an einen zweiten Eingang der Subtrahierstufe Y=B-A gelegt. Gleichzeitig wird in das Synchronisierungs-Register Sync_Reg ein neuer Phasenwert eingelesen. Bei dem nächsten (vierten) Takt wird in der Subtrahierstufe Y=B-A eine erste Phasendifferenz Y=B-A der Phasenwerte A, B gebildet, dann beim nächsten (fünften) Takt ausgelesen und in einem zweiten Register Reg.2 gespeichert. Die am Ausgang der Subtrahierstufe entstehende Folge der ersten Phasendifferenzen kann bedarfsweise als Zwischenergebnisfolge ZE ausgekoppelt werden und zur Frequenzmessung verwendet werden, was anhand der Fig.3 näher erläutert wird.

Mit den nächsten Takten wird nun in der beschriebenen Weise eine weitere erste Phasendifferenz Y=B-A gebildet. Bei dem nächsten Takt wird die in dem zweiten Register Reg.2 gespeicherte Phasendifferenz ausgelesen und an einen ersten Eingang A einer zweiten Subtrahierstufe Y=IB-AI, gelegt. Gleichzeitig wird die gebildete weitere Phasendifferenz an einen zweiten Eingang B der zweiten Subtrahierstufe Y=IB-AI, gelegt. In dieser zweite Subtrahierstufe wird auch der Absolutbetrag Y = IB - AI der zweiten Phasendifferenzen gebildet. Dieser Absolutbetrag Y = IB - AI wird an einen bereits beschriebenen digitalen Tiefpass geleitet und dann an einen ebenfalls bereits beschriebenen Vergleicher mit Hysterese. An dessen Ausgang entsteht wieder, in Abhängigkeit von den vorgebbaren Schaltschwellen Schwelle_EIN, Schwelle-AUS ein digitales Detektorsignal, das weiterverarbeitet werden kann.

Die entsprechend Fig.1, Fig.2 beschriebenen Anordnungen sind außerdem in vorteilhafter Weise geeignet zur Bestimmung der Momentanfrequenz des frequenzbegrenzten Eingangssignals. Dieses wird anhand der Fig.3 näher erläutert.

Fig.3 unterscheidet sich von der beschriebenen Fig.1 lediglich dadurch, dass auf der rechten Seite zusätzlich eine Anordnung zur Momentanfrequenz Messung vorhanden ist. Diese ist an sich in der nicht vorveröffentlichten deutschen Patentanmeldung 197 44 691 beschrieben und verwendet ebenfalls Differenzen von Phasenabtastwerten. Aus diesen Differenzen wird dann mittels der Beziehung

$$f(x) = \frac{1}{2\pi} \bullet \frac{\Sigma\Delta\varphi_i}{\Sigma\Delta t_i},$$

die Momentanfrequenz f(x) des Eingangssignals bestimmt,
mit $\Delta\varphi_i = \varphi_n - \varphi_m$, gleich der Differenz der Phasenabtastwerte (für alle n, m im Impulszeitraum) und $\Delta t_i$ gleich der Differenz der entsprechenden Zeitwerte.

Da bei der hier vorhandenen Anordnung gemäß Fig.1, Fig.2, Fig.3 ebenfalls Differenzen, die mit Y=B-A bezeichnet sind, von Phasenabtastwerten gebildet werde, können diese in paralleler Form (Fig.3) oder in serieller Form (Fig.2, ausgekoppelt an der mit ZE bezeichneten Stelle) an die Anordnung zur Momentanfrequenz Messung geleitet werden und dort bedarfsweise ausgewertet werden.

Es ist ersichtlich, dass das beschriebene Verfahren in vielfältiger Weise anwendbar ist, beispielsweise als Schaltungsanordnung, die entsprechend Fig.1, Fig.3 aus diskreten Bauelementen für höchste Frequenzen, beispielsweise den GHz-Bereich (Takt), aufgebaut ist. Durch die dort beschriebene parallele Verarbeitung der Phasenabtastwerte sind außerdem Nutzsignale, die hohe Frequenzen enthalten, detektierbar.

Das anhand der Fig.2 beschriebene Verfahren ist aufgrund der seriellen Signalverarbeitung für einen geringeren Frequenzbereich des Nutzsignals geeignet. Der Frequenzbereich der Anordnung gemäß Fig.2 ist im Wesentlichen von der zulässigen Taktfrequenz der verwendeten Bauelemente abhängig.

Weiterhin ist es möglich, die anhand der Fig.1 bis 3 beschriebenen Anordnungen im Wesentlichen vollständig als Datenverarbeitungsprogramm auf einer Datenverarbeitungsanlage zu realisieren. Dabei ist die Leistungsfähigkeit bezüglich der zu detektierenden Nutzsignale abhängig von der Leistungsfähigkeit des Datenverarbeitungsprogramms und/oder der Datenverarbeitungsanlage.

**Patentansprüche**

1. Verfahren zur Detektion eines gepulsten Nutzsignals, wobei

   - aus einem analogen Eingangssignal durch eine Filterung, die an das zu detektierende Nutzsignal angepasst ist, ein frequenzbegrenztes Eingangssignal gebildet wird und
   - aus dem frequenzbegrenzten Eingangssignal mittels eines Integrationsvorganges das Nutzsignal ermittelt wird, **dadurch gekennzeichnet,**
   - **dass** aus dem frequenzbegrenzten Eingangssignal durch eine amplitudenbegrenzende Analog-Digital-Wandlung zunächst eine Folge digitaler Phasenwerte mit vorgebbarer Wortlänge gebildet wird,
   - **dass** von jeweils zwei benachbarten Phasenwerten eine Folge von ersten Phasendifferenzen (Y=B-A) gebildet wird,
   - **dass** aus jeweils zwei benachbarten ersten Phasendifferenzen durch eine Differenzbildung eine Folge von zweiten Phasendifferenzen gebildet wird,
   - **dass** zu den zweiten Phasendifferenzen die zugehörigen Absolutbeträge (Y=IB-AI) gebildet werden und
   - **dass** die Absolutbeträge (Y=IB-AI) einem digitalen Tiefpass mit vorgebbarer Integrationszeit, die an das zu detektierende Nutzsignal anpassbar ist, zugeleitet werden, wobei das Nutzsignal am Ausgang des Tiefpasses entsteht.

2. Verfahren zur Detektion eines gepulsten Nutzsignales nach Anspruch 1, **dadurch gekennzeichnet, daß** die Bildung der ersten Phasendifferenzen, der zweiten Phasendifferenzen sowie der Absolutbeträge mittels einer parallelen Signalverarbeitung erfolgt.

3. Verfahren zur Detektion eines gepulsten Nutzsignales nach Anspruch 1, **dadurch gekennzeichnet, daß** die Bildung der ersten Phasendifferenzen, der zweiten Phasendifferenzen sowie der Absolutbeträge mittels einer seriellen Signalverarbeitung erfolgt.

4. Verfahren zur Detektion eines gepulsten Nutzsignales nach einem der vorhergehenden Ansprüche, **dadurch gekennzeichnet, daß** das Ausgangssignal des digitalen Tiefpasses einem Vergleicher mit Hysterese und vorgebbaren Schwellwerten zugeleitet wird derart, daß am Ausgang des Vergleichers ein digital verarbeitbares Detektorsignal, welches dem Nutzsignal entspricht, entsteht.

**5.** Verfahren zur Detektion eines gepulsten Nutzsignals nach einem der vorhergehenden Ansprüche, **dadurch gekennzeichnet, dass** die Momentanfrequenz des frequenzbegrenzten Eingangssignals ermittelt wird mittels einer Anordnung zur Momentanfrequenz-Messung, gemäß folgender Funktion

$$f(x) = \frac{1}{2\pi} \bullet \frac{\Sigma\Delta\varphi_i}{\Sigma\Delta t_i},$$

mit $\Delta\varphi_i = \varphi_n - \varphi_m$ für alle n, m im Impulszeitraum
und $\varphi_n$, $\varphi_m$ Phasenwerte
und $\Delta t_i$ Differenz der entsprechenden Zeitwerte.

**Claims**

**1.** Method for detecting a pulsed useful signal,

- a frequency-limited input signal being formed from an analogue input signal by means of filtering which is adapted to the useful signal to be detected, and
- the useful signal being determined from the frequency-limited input signal by means of an integration process, **characterized**
- **in that** a sequence of digital phase values with a predefinable word length is first of all formed from the frequency-limited input signal by means of amplitude-limiting analogue/digital conversion,
- **in that** a sequence of first phase differences (Y=B-A) is formed from two respective adjacent phase values,
- **in that** a sequence of second phase differences is formed from two respective adjacent first phase differences by means of differencing,
- **in that** the associated absolute magnitudes (Y=IB-AI) are formed for the second phase differences, and
- **in that** the absolute magnitudes (Y=IB-AI) are passed to a digital low-pass filter with a predefinable integration time which can be adapted to the useful signal to be detected, the useful signal being formed at the output of the low-pass filter.

**2.** Method for detecting a pulsed useful signal according to Claim 1, **characterized in that** the first phase differences, the second phase differences and the absolute magnitudes are formed by means of parallel signal processing.

**3.** Method for detecting a pulsed useful signal according to Claim 1, **characterized in that** the first phase differences, the second phase differences and the absolute magnitudes are formed by means of serial signal processing.

**4.** Method for detecting a pulsed useful signal according to one of the preceding claims, **characterized in that** the output signal from the digital low-pass filter is passed to a comparator with hysteresis and predefinable threshold values in such a manner that a detector signal which can be digitally processed and corresponds to the useful signal is produced at the output of the comparator.

**5.** Method for detecting a pulsed useful signal according to one of the preceding claims, **characterized in that** the instantaneous frequency of the frequency-limited input signal is determined, by means of an arrangement for measuring the instantaneous frequency, according to the following function

$$f(x) = \frac{1}{2\pi} \bullet \frac{\Sigma\Delta\varphi_i}{\Sigma\Delta t_i}$$

where $\Delta\varphi_i = \varphi_n-\varphi_m$ for all n, m in the pulse period
and $\varphi_n$, $\varphi_m$ are phase values
and $\Delta t_i$ is the difference between the corresponding time values.

**Revendications**

1. Procédé de détection d'un signal utile pulsé, selon lequel

   - un signal d'entrée à fréquence limitée est formé à partir d'un signal d'entrée analogique par un filtrage qui est adapté au signal utile à détecter,
   - le signal utile est déterminé à partir du signal d'entrée à fréquence limitée au moyen d'un processus d'intégration, **caractérisé en ce**
   - **qu'**une séquence de valeurs de phase numériques ayant une longueur de mot pouvant être prédéfinie est tout d'abord formée à partir du signal d'entrée à fréquence limitée par une conversion analogique/numérique à limitation d'amplitude,
   - **qu'**une séquence de premières différences de phase (Y = B-A) est formée à chaque fois par deux valeurs de phase voisines,
   - **qu'**une séquence de deuxièmes différences de phase est formée par un calcul de différence à partir de deux premières différences de phase respectivement voisines,
   - **que** les valeurs absolues (Y = |IB-A|) associées sont calculées pour les deuxièmes différences de phase et
   - **que** les valeurs absolues (Y = IB-AI) sont acheminées à un filtre passe-bas numérique ayant un temps d'intégration pouvant être prédéfini, lequel peut être adapté au signal utile à détecter, le signal utile étant produit à la sortie du filtre passe-bas.

2. Procédé de détection d'un signal utile pulsé selon la revendication 1, **caractérisé en ce que** la formation des premières différences de phase, des deuxièmes différences de phase ainsi que des valeurs absolues s'effectue au moyen d'un traitement en parallèle des signaux.

3. Procédé de détection d'un signal utile pulsé selon la revendication 1, **caractérisé en ce que** la formation des premières différences de phase, des deuxièmes différences de phase ainsi que des valeurs absolues s'effectue au moyen d'un traitement en série des signaux.

4. Procédé de détection d'un signal utile pulsé selon l'une des revendications précédentes, **caractérisé en ce que** le signal de sortie du filtre passe-bas numérique est acheminé à un comparateur ayant une hystérésis et des valeurs de seuils pouvant être prédéterminées de sorte qu'à la sortie du comparateur est produit un signal de détecteur pouvant être soumis à un traitement numérique et qui correspond au signal utile.

5. Procédé de détection d'un signal utile pulsé selon l'une des revendications précédentes, **caractérisé en ce que** la fréquence momentanée du signal d'entrée à fréquence limitée est déterminée au moyen d'un arrangement de mesure de la fréquence momentanée conformément à la fonction suivante

$$f(x) = \frac{1}{2\pi} \cdot \frac{\sum \Delta\varphi i}{\sum \Delta t i}$$

avec $\Delta\varphi i = \varphi n - \varphi m$ pour tous les n, m dans la période d'impulsion
et $\varphi n$, $\varphi m$ sont des valeurs de phase
et $\Delta t i$ est la différence des valeurs de temps correspondantes.

Fig.1

## Digitale Phasenabtastwerte

Sync Reg

Reg.1

A

B

Y=B-A

Y

ZE

Takt

Reg.2

A

B

Y=IB-AI

digitaler
Tiefpass

Start

Schwelle EIN

SQ

Schwelle AUS

Vergleicher mit
Hysterese

Detektorsignal Ausgang

Fig.2

Digitale Phasenabtastwerte

Verarbeitungs
Takt

| 1 | 2 | 3 | 4 | 5 | a-1 | a |

Eingangsregister

| Y=B-A | Y=B-A | Y=B-A | Y=B-A | Y=B-A | | Y=B-A |

Pipeline Register

| Y=lB-Al | Y=lB-Al | Y=lB-Al | Y=lB-Al | Y=lB-Al | Y=lB-Al | Y=lB-Al |

Momentanfrequenz
Messung

Pipeline Register

Summierer / digitaler Tiefpass

Schwelle EIN ———————

→ SQ

Schwelle AUS———→

Vergleicher mit
Hysterese

Detektorsignal Ausgang

Fig.3

9

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5703914 A
- DE 19744691